# EUROPEAN PATENT APPLICATION

(11) **EP 1 270 336 A2**
(43) Date of publication of application: **02.01.2003**
(21) Application number: 02013315.3
(22) Date of filing: 18.06.2002
(51) Int. Cl.: B60R 16/02

(54) **Fuse and relay box in a motor vehicle**

(30) Priority: 25.06.2001 DE 10130531
(71) Applicant: Tyco Electronics AMP GmbH, 64625 Bensheim (DE)
(72) Inventor: Schoepf, Thomas, Dr., Michingan 48307 (US)
(74) Representative: Grünecker, Kinkeldey, Stockmair & Schwanhäusser Anwaltssozietät

(57) **Abstract**

A fuse and relay box for a motor vehicle having an insulating housing (1), an electrical circuit (5), and a switching device (3). The housing (1) having a cover (2) that moves between an open position and a closed position. The electrical circuit (5) is contained in the housing (1), connected to a motor vehicle electrical system connection (4) and has electrical components. The switching device (3) has a contact bridge (33) that connects the vehicle electrical system connection (4) to the electrical circuit (5) when the cover (2) is moved to a closed position and disconnects the vehicle electrical system connection (4) to the electrical circuit (5) when the cover (2) is moved to an open position. The switching device (3) is coupled to a sensor element (31) for detecting whether the cover (2) is in the open or closed position.

## Description

The invention relates to a fuse and relay box for use in a motor vehicle. More particularly, the invention relates to a fuse and relay box for use in a motor vehicle having a switching device that opens or closes a vehicle electrical system connection to an electrical circuit.

Electrical components in fuse and relay boxes need to be protected from external mechanical influences and still be accessible for maintenance. The fuse box is typically arranged inside the motor vehicle or in the engine compartment in such a way that it is easily accessible and may be opened to change a blown fuse.

Because of a progressive increase in the use of electrical systems in motor vehicles there is an increasing need to provide fuse and relay boxes that can accommodate a higher supply voltage. These electrical systems include communication systems for cell phone appliances and hands free devices, navigation systems such as global positioning systems (GPS), added comfort features such as electrical seat adjustment, and safety systems such as airbags and antilock braking systems (ABS). In addition to the typical 12 Volt operating voltage in motor vehicle electrical systems, a higher operating voltage of 42 Volts has become established as a "quasi standard" as described for example in a German language publication by D. Schramm, H. Engel: entitled "Consequences of a 42V vehicle electrical system for plug-in connectors", VDE-Fachbericht 55, 1999, pages 19-28). With supply voltages of this magnitude, however, there is an increased risk of undesirable and possibly harmful arcing that can occur, for example, during connection or disconnection of fuses.

If a blown fuse is changed, for example, without eliminating an existing short-circuit, a new fuse is plugged in under load. In the case of fuses provided with connectors in the form of blade contacts, arcing arises when the new fuse is inserted that can cause welding of contacts between the fuse and a receiving holder. The welding of the contacts between the fuse and the receiving holder can make the receiving holder unusable. In the case of relay boxes in particular, this can result in high costs.

Melting or welding of the contacts is often countered in practice by using heat-resistant materials for the blade contacts. For example, instead of zinc, which has a melting temperature of 420°C, copper is used, which has a melting temperature of 1020°C. However, all that is achieved thereby is a reduction in the contact-melting effect of arcing, but not the elimination thereof. Other approaches to solving the problem that have been proposed include special sacrificial contacts or fuse holders.

It is therefore desirable to develop a fuse and relay box for a motor vehicle that avoids welding of contacts due to arcing upon disconnection or connection of electrical components while protecting the fuse and relay box from external influences.

This and other objects of the invention are achieved by a fuse and relay box for a vehicle having an insulating housing, an electrical circuit and a switching device. The insulating housing having a cover that moves between an open position and a closed position. The electrical circuit is contained in the insulating housing, connected to a vehicle electrical system connection and has electrical components. The switching device opens or closes the connection between the vehicle electrical system connection and the electrical circuit depending on whether the cover is in the open position or the closed position.

The invention will now be described by way of example with reference to the following figures, wherein:
Fig. 1 is a schematic representation of an electrical circuit having electrical components,
Fig. 2 is a schematic representation of a fuse and relay box having the electrical circuit of Fig. 1,
Fig. 3 is a schematic representation of a switching device of Fig. 2,
Fig. 4 is a cross-sectional view of the switching device of Fig. 3, and
Fig. 5 is a schematic representation of a fuse and relay box having an independent sensor element.

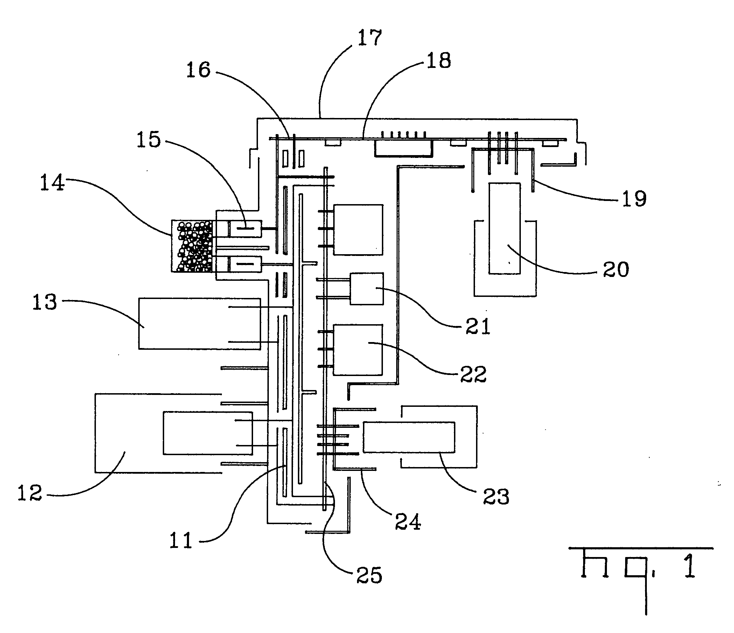

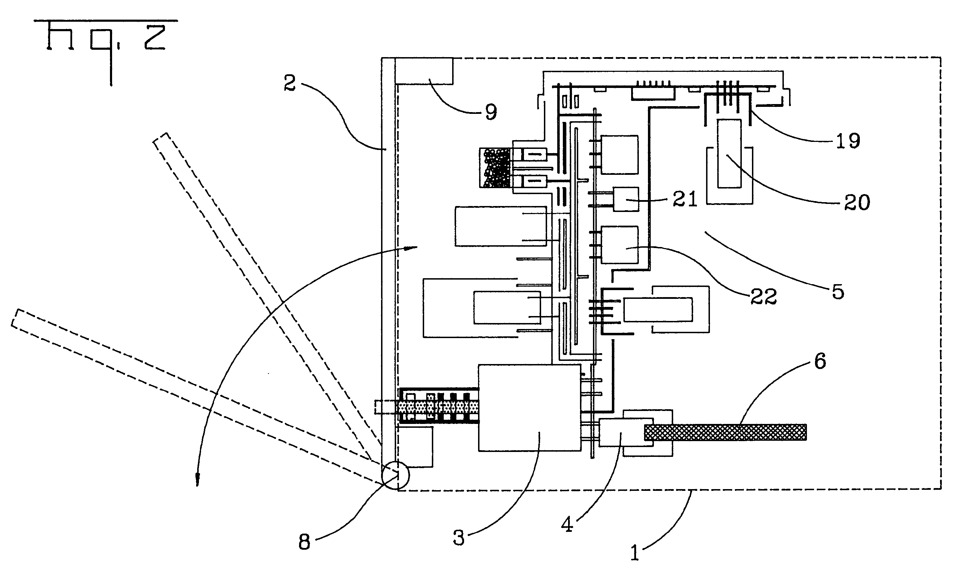

The invention will now be described in greater detail with reference to the figures. Fig. 2 shows a fuse and relay box of a motor vehicle comprising an electrical circuit 5, an insulating housing 1 and a switching device 3. Shown in Fig. 1, the electrical circuit 5 comprises a first printed circuit board 25 having a first pin trough 24 for a plug-in connector 23, a solder relay 22 and an element 21 with positive thermal coefficients (PTC). The first printed circuit board 25 is connected to a stamped grid stack 11. The stamped gird stock 11 is connected to a second printed circuit board 18 by a solder connection 16. A plug-in connector 12, a J-case fuse 13 and a mini fuse 14 with cross contacts 15 are arranged on the stamped grid stack 11. A second pin trough 19 for a printed circuit board (PCB) connector 20 is provided on the second printed circuit board 18. The second printed circuit board 18 is protected by a mechanical protection element 17.

The electrical circuit 5 comprises electrical components which may be exchanged or plugged in by extraction and insertion, for example, the fuses 13 and the plug-in connector 12. The electrical circuit 5 also comprises fixed components that are not simply replaceable in the context of maintenance, for example, the solder relay 22. Although the electrical circuit 5 is illustrated with a a given combination of electrical components, the fuse and relay box may accommodate electrical circuits comprising any combination of electrical components. It is also not necessary for the fuse or the relay to be one of the electrical components.

Shown in Fig. 2, the housing 1 has an access cover 2 moveably mounted on a hinge 8. A limit stop 9 restricts the movement of the cover 2 to at least two open positions that are illustrated by dashed lines in Fig 2. When the cover 2 is in a closed position, the inside of the fuse and relay box is inaccessible from outside. The housing 1 conventionally consists of an electrically insulating material.

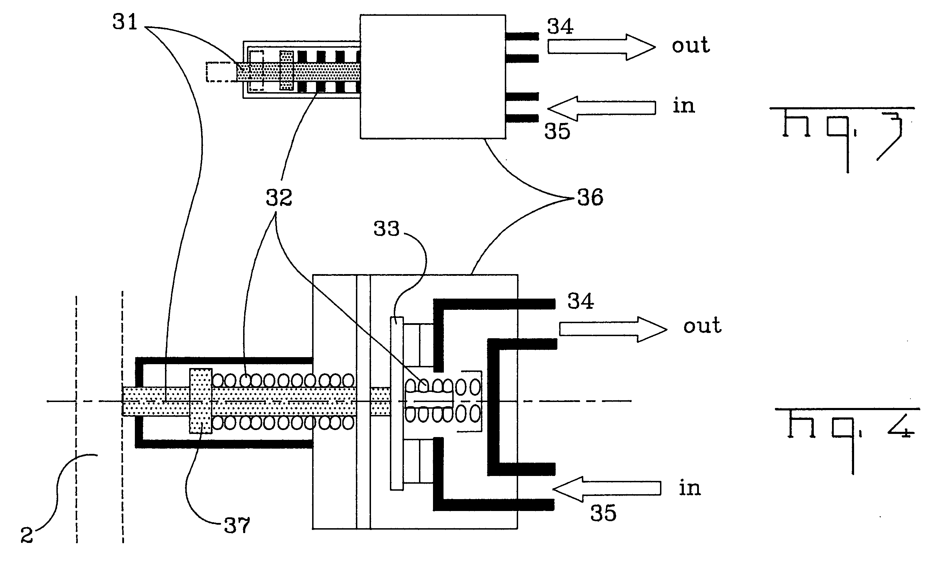

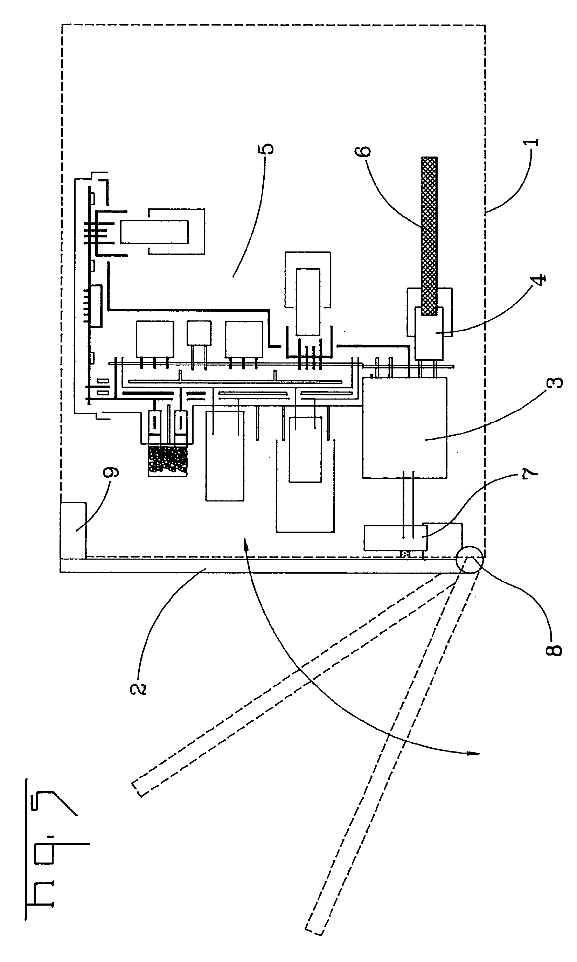

The switching device 3 is connected with a motor vehicle electrical system via a battery supply line 6 and a motor vehicle electrical system connector 4. Shown in Figs 3 and 4, the switching device 3 has an input 35 and an output 34. A supply voltage of the vehicle electrical system is applied to the input 35 and may be connected with the electrical circuit 5 via the output 34, shown in Fig. 2. The switching device 3 has a switch housing 36, a contact bridge 33, a movable sensor element 31 and a restoring unit in the form of a spring 32.

The interaction between the components in the fuse and relay box will now be described in greater detail. Fig. 4 shows the cover 2 in the closed position, whereby the cover 2 is positioned against the sensor element 31. The cover 2 acts on the sensor element 31 and the contact bridge 33 connected therewith to compress the spring 32 positioned against contacts (not shown) of the input 35 and the output 34 of the switching device 3. Thus, when the cover 2 is in the closed position, electrical connection between the electrical system connection 4 and the electrical circuit 5, shown in Fig. 2, is established.

On the other hand, when the cover is in an open position, the spring 32 decompresses and acts on the sensor element 31 moving the sensor element 31 toward the position shown by the broken lines in Fig. 3. The positioning of the sensor element 31 is determined by the limit stop 37. As the spring 32 decompresses, the contact bridge 33 connected with the sensor element 31 is disconnected from the contacts (not shown) of the input 35 and the output 34 thereby disconnecting the electrical connection between the electrical system connection 4 and the electrical circuit 5. Because no voltage is applied to any of the electrical components of the electrical circuit 5, short-circuits caused by inadvertent contacting of conductive parts of the electrical circuit 5 are eliminated.

Fig. 5 shows an alternative embodiment of the switching device of the fuse and relay box. In contrast to Fig. 2, the switching device 3 in Fig. 5 is coupled to a sensor element in the form of an ancillary switch 7, which may be arranged independently of the switching device 3. The ancillary switch 7 detects the open or closed position of the cover 3 and signals the position of the cover 2 to the switching device 3. The ancillary switch 7 may comprise, for example, a mechanical, electromechanical, inductive or optical type component. The ancillary switch 7 may detect the open or closed position of the cover 2 directly by contact with the cover 2 or by measuring the distance to the cover, or indirectly via the hinge 8. The ancillary switch 7 may accordingly be suitably arranged on or in the housing 1, on the electrical circuit 5 or the cover 2.

The foregoing illustrates some of the possibilities for practicing the invention. Many other embodiments are possible within the scope and spirit of the invention. For example, the connection to the electrical circuit 5 is connected or disconnected by the switching device 3. However, the electrical circuit 5 may also be designed so that only replaceable electrical components 13, 14 are disconnected from the motor vehicle electrical connection when the cover 2 is in an open position. Furthermore, if a blown fuse 14 is detected from amongst a plurality of fuses 13, 14, selective disconnection of the affected fuses 14 or relevant areas in the electrical circuit 5 is also possible. In this way it is ensured that certain functions cannot be switched off in the motor vehicle, irrespective of whether the cover 2 is in the open position. In addition, the electrical circuit 5 may also be arranged on the cover 2 to simplify access to the electrical components.

Moreover, the switching device 3 may be arranged in the vicinity of the battery or on a supply line in the motor vehicle in order to isolate other electricity consuming devices in the motor vehicle from the electricity supply with one switching process. In the case of such an arrangement of the switching device 3, the switching device 3 could also be used by other electrical systems in the motor vehicle, for example, safety systems such as accident-detecting units, in order to be able to switch certain parts of the motor vehicle into a de-energised state. Likewise, the switching device 3 may also be used to disconnect the battery during transportation of the vehicle.

Moreover, the cover may be replaced by any desired device that allows access to the fuse and relay box while protecting the fuse and relaty box from external influences. For example, the cover could be a shutter or screen that may be removed completely or displaced for opening of the fuse and relay box.

In addition to use of the insulating housing 1, it is also possible for the walls of the fuse and relay box to be formed at least in part of bodywork parts or other parts of the motor vehicle. In this way, material and manufacturing costs for the fuse and relay box may be saved while achieving complete protection of the electrical circuit 5 against external mechanical influences.

It is, therefore, intended that the foregoing description be regarded as illustrative rather than limiting, and that the scope of the invention is given by the appended claims together with their full range of equivalents.

## Claims

1. A fuse and relay box for a vehicle, comprising
an insulating housing (1) having a cover (2) that moves between an open position and a closed position;
an electrical circuit (5) contained in the insulating housing (1), connected to a vehicle electrical system connection (4) and having electrical components; and **characterized in that**:
a switching device (3) opens and closes the connection between the vehicle electrical system connection (4) and the electrical circuit (5) depending on whether the cover (2) is in the open position or the closed position.

2. A fuse and relay box as set forth in claim 1, **characterized in that** the switching device (3) has a contact bridge (33) that connects the vehicle electrical system connection (4) to the electrical circuit (5) when the cover (2) is moved to a closed position and disconnects the vehicle electrical system connection (4) to the electrical circuit (5) when the cover (2) is moved to an open position.

3. A fuse and relay box as set forth in claim 1 or 2, **characterized in that** a sensor element (31) is coupled to the switching device (3), for detecting whether the cover (2) is in the open or closed position.

4. A fuse and relay box as set forth in claim 3, **characterized in that** the sensor element (31) is a spring-loaded contact pin that acts on the switching device (3) in response to a movement of the cover (2).

5. A fuse and relay box as set forth in claim 3, **characterized in that** the sensor element (31) is an ancillary switch (31) arranged independently from the switching device.

6. A fuse and relay box as set forth in any one of claims 1 to 5, **characterized in that** the cover (2) is mounted on the insulating housing by a hinge (8).

7. A fuse and relay box as set forth in any one of claims 1 to 6, **characterized in that** the insulating housing (1) has walls formed by bodywork parts.

8. A fuse and relay box as set forth in any one of claims 1 to 7, **characterized in that** a limit stop (9) is provided for restricting the movement of the cover (2).

9. A fuse and relay box as set forth in any one of claims 1 to 8, **characterized in that** the switching device (3) has an input (35) connected to the vehicle electrical system connection (4) and an output (34) connected to the electrical circuit (5).
